# EUROPEAN PATENT SPECIFICATION

(11) **EP 0 587 570 B1**
(45) Date of publication and mention of the grant of the patent: **27.10.1999**
(21) Application number: 92906565.4
(22) Date of filing: 18.03.1992
(51) Int. Cl.: H04N 5/225

(54) **A METHOD OF FIXING AN OPTICAL IMAGE SENSOR IN ALIGNMENT WITH THE IMAGE PLANE OF A LENS ASSEMBLY**
VERFAHREN ZUR FIXIERUNG EINES OPTISCHEN BILDSENSORS IN AUSRICHTUNG ZUR BILDFLÄCHE EINER LINSENANORDNUNG
METHODE DE FIXATION D'UN CAPTEUR OPTIQUE D'IMAGES EN ALIGNEMENT AVEC LE PLAN IMAGE D'UN SYSTEME DE LENTILLES

(30) Priority: 17.04.1991 GB 9108193
(43) Date of publication of application: 23.03.1994
(73) Proprietor: GEC-MARCONI AVIONICS (HOLDINGS) LIMITED, Stanmore, Middlesex HA7 4LY (GB)
(72) Inventor: HALL, Peter, Edinburgh EH5 3QD (GB)
(74) Representative: Cockayne, Gillian
(86) International application number: GB9200485
(87) International publication number: WO9219069

(56) References cited:
- US-A- 4 594 613
- PATENT ABSTRACTS OF JAPAN vol. 9, no. 47 (E-299)(1770) 27 February 1985
- PATENT ABSTRACTS OF JAPAN vol. 9, no. 10 (E-290)(1733) 17 January 1985
- PATENT ABSTRACTS OF JAPAN vol. 8, no. 81 (E-238)(1518) 13 April 1984
- PATENT ABSTRACTS OF JAPAN vol. 9, no. 197 (E-335)(1920) 14 August 1985
- PATENT ABSTRACTS OF JAPAN vol. 8, no. 59 (E-232)(1496) 17 March 1984

## Description

The invention relates to a method of fixing an optical image sensor in alignment with the image plane of a lens assembly, for example, for use in a video camera and an image sensor assembly.

Known methods either involve mounting the sensor in a predetermined location and relying on the manufacturing tolerances to give the required accuracy, or on mounting the sensor and then adjusting its position by means of adjustment screws, in which case relatively heavy and expensive components have to be left in position on the finished assembly.

JP 59-186479(A) teaches a method of fixing an optical image sensor in alignment with an image plane of a lens assembly wherein the sensor has a plurality, of surfaces each arranged to mate with a corresponding surface on the lens assembly and one of the surfaces is defined on an elongated structure, the method comprising operatively connecting the sensor to a display means, providing an image for receipt by the image sensor through the lens assembly, introducing the corresponding surfaces together, moving the sensor relative to the lens assembly, thereby moving the corresponding surfaces relative to one another until the image received by the sensor is optimised, fixing the corresponding surfaces together, and disconnecting the sensor from the display means. This document also teaches an image sensor assembly, comprising an optical image sensor in alignment with an image plane of a lens assembly, the sensor having a plurality of surfaces each arranged to mate with a corresponding surface on the lens assembly and one of the surfaces is defined on an elongated structure.

According to a first aspect of the invention the method includes operably connecting and fixing the sensor to a planar board, then arranging the surfaces of the board to correspond with surfaces on the lens assembly, holding the board in a jig which is operative to move the board along three orthogonal axes, operating the jig so as to move the board relative to the lens assembly to optimise the image received by the sensor, and fixing each pair of corresponding surfaces together using solder and holding the board in position until the solder has set.

Preferably the other of each pair of surfaces is provided on walls defining through-holes.

Once the image sensor has been secured, only each elongated structure remain, which is to be contrasted to known methods incorporating adjustment screws and the like. The method enables the image sensor to be installed accurately and at a low cost.

The jig is also preferably adapted to rotate the board about an axis extending at right angles to the plane of the board and also preferably to tilt the board about an axis extending in the plane of the board. The position of the board in the jig may be adjusted manually, e.g. by means of micrometer-type mechanisms, or the jig may include stepper motors or the like. The image received by the sensor may be optimised manually, e.g. by an operator looking at the display means and then making appropriate adjustment of the position of the sensor, or computer means may be present for providing an indication of the level of adjustment required to bring the sensor into alignment with the projected image. The computer means may be operative to directly control the jig.

According to a second aspect of the invention the sensor is operably connected and fixed to a planar board carrying the surfaces arranged to correspond with each surface on the lens assembly, the board is retainable in a jig operative to move the board in relation to the lens assembly along three orthogonal axes. and the board is provided to be soldered to the lens assembly at the corresponding surfaces and held in alignment until the solder has set.

In another aspect, the invention provides a lens assembly having an optical image sensor attached thereto in alignment with the image plane of the lens assembly, the optical image sensor being mounted upon a planar circuit board, a plurality of pins extending between the board and the lens assembly, the pins passing through holes on either the board or the lens assembly, the board being soldered to the lens assembly where the pins pass through their respective holes.

As used herein, the term "pin" is intended to include any suitable elongate structure which need not be of circular cross-section. Similarly, the term "hole" is intended to include, e.g., notches, i.e. holes having a portion of one side missing, and holes of a variety of shapes, e.g., arcuate slots and including those having a blind end, in the manner of a socket.

In order that the invention may be well understood, an embodiment thereof will now be described by way of example only, with reference to the drawings in which:
Figure 1 is a schematic, partly longitudinal sectional, view of a lens assembly and image sensor at a preliminary stage of assembly;
Figure 2 is a schematic view showing the directions of movement of the jig shown in Figure 1;
Figure 3 is a view along lines 3-3 of Figure 1; and
Figure 4 is a view of part of the apparatus shown in Figure 1, but at a further stage of assembly.

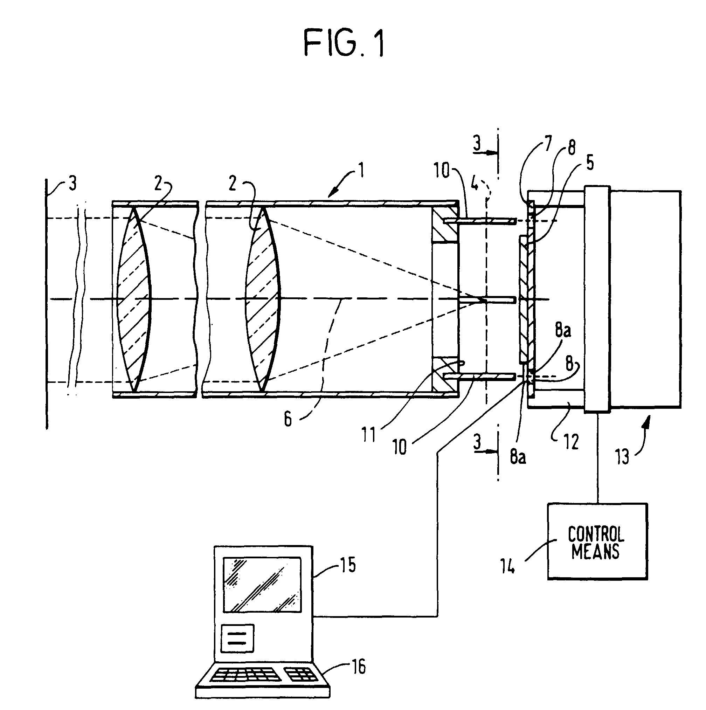

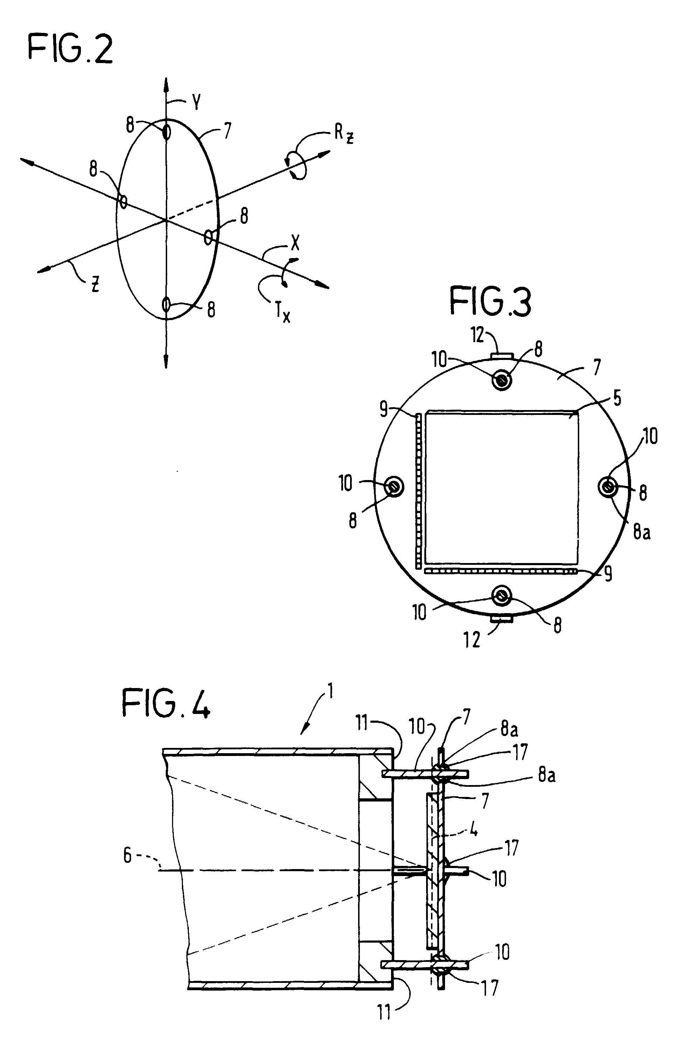

As shown in Figure 1, a lens assembly 1 comprises a barrel or housing within which lens elements 2 are located. Further lens and e.g. focusing elements may be present, but have been omitted for clarity. The lens assembly is arranged to focus an image extending, e.g., in a plane 3 at an image plane 4. Where such an assembly is to be installed, e.g., in a video camera, it is important that a suitable image sensor 5 is fixed accurately in alignment with the image plane 4 and coaxial with the optical axis 6 of the lens assembly 1. As shown best in Figure 3, an optical image sensor 5, of known type, is mounted upon a member 7 comprising, as shown, a planar circular circuit board. The member 7 may be made of a suitable electrically and thermally insulating material such as mica. The member 7 includes a plurality of through-holes 8, four as shown, circumferentially spaced apart about the image sensor 5. The inner side wall 8a of each hole 8 is coated with metal. Connecting means 9 are also provided for operatively connecting the image sensor 5 to further signal processing circuitry, not shown, provided in an article within which the finished assembly is installed.

The lens assembly 1 further includes a plurality of pins 10 corresponding to the number of holes 8 in the member 7. The pins extend from a rear face 11 of the lens assembly 1 and each extends parallel to the optical axis 6. Each pin 10 is of smaller diameter than the corresponding hole 8 in the member 7, as best shown in Figure 3. The outer surface of each pin 10 and the inner side wall 8a of each hole 8 provide a pair of intercalating surfaces.

While the member 7 is being fixed to the lens assembly 1, the member 7 is held in the jaws 12 of a jig 13. As best seen in Figure 3 the jig 13 is operative to move the member 7 in three orthogonal direction, indicate by arrows X, Y and Z, two of which extend in the plane of the member and the other of which extends at right angles to the plane of the member. The jig is also operative to rotate the member about the Z axis extending at right angles to the plane of the member, indicated by arrow R_{z}, and also to tilt the member about one of the axes, the X axis as shown, extending in the plane of the member, as indicated by arrow Tₓ. Each direction of movement may be controlled by means of manual adjustment, e.g. a micrometer-type mechanism, not shown, or alternatively stepper motors or the like may be provided. The means for controlling the position of the member by the jig are indicated schematically by box 14 in Figure 1. As also shown in Figure 1 the image sensor 5 is operatively connected to a display means 15 for displaying the image received by the sensor. As shown, the display means 15 is associated with a computer means 16, whose function will be described in greater detail later on.

During assembly, the member is initially gripped by the jaws 12 of the jig 13. The jig is operated so that the holes 8 are aligned with their respective pins 10 and the jig is then advanced so that the pins are introduced into their respective holes. Meanwhile, an image 3 is projected through the assembly and is brought to a focus at the image plane 4. The computer means 16 is operative to compare the projected and received images and to provide an indication of the level of adjustment needed in each of the various directions. As stated previously, the adjustments may either be performed manually or by the computer means 16, which and may be operatively connected to the control means 14. Member 7 is moved relative to the pins until the received image is optimised, i.e. the image sensor lies coaxial with the optical axis 6 of the lens assembly and extends in the direction of the image plane 4. The sensor is then fixed in position by soldering the pins in position where they pass through their respective holes, as is best shown in Figure 4. The solder 17 fuses with the metal coating provided on the inner walls 8a of the holes 8. The jig may include means for applying the solder. Once the member has been secured in position, the sensor is disconnected from the display means 15 and the jig is released from the member. The lens assembly including the secured image may then proceed to a further stage of manufacture.

The image sensor can quickly be removed and replaced should it develop a fault. It is to be understood that the invention is applicable to the manufacture of lens assemblies operating in the visible region of the spectrum as well as those operating in other regions, e.g. the infra-red region.

## Claims

1. A method of fixing an optical image sensor (5) in alignment with an image plane (4) of a lens assembly (1) wherein the sensor has a plurality of surfaces (8,8a) each arranged to mate with a corresponding surface (10) on the lens assembly and one of the surfaces is defined on an elongated structure, the method comprising
operatively connecting the sensor (5) to a display means (15),
providing an image for receipt by the image sensor through the lens assembly,
introducing the corresponding surfaces together,
moving the sensor relative to the lens assembly, thereby moving the corresponding surfaces relative to one another until the image received by the sensor is optimised,
fixing the corresponding surfaces together, and
disconnecting the sensor from the display means,
characterised by
operably connecting and fixing the sensor to a planar board (7),
then arranging the surfaces of the board to correspond with surfaces on the lens assembly,
holding the board in a jig (13) which is operative to move the board along three orthogonal axes,
operating the jig so as to move the board relative to the lens assembly to optimise the image received by the sensor, and
fixing each pair of corresponding surfaces together using solder and holding the board in position until the solder has set.

2. A method according to Claim 1, wherein the other of each pair of surfaces is provided on walls defining through-holes.

3. A method according to Claim 2, wherein each elongated structure is associated with the lens assembly and each hole extends through the board.

4. A method according to any preceding claim, wherein the jig is further operative to rotate the board about an axis extending at right angles to the plane of the board, and to tilt the board about an axis extending in the plane of the board.

5. A method according to any preceding claim, comprising moving the board by adjusting one or more micrometer-type mechanisms provided on the jig.

6. A method according to any preceding claim, wherein the display means is associated with computer means for providing an indication of the level of adjustment required to bring the sensor into alignment with the projected images.

7. An image sensor assembly, comprising
an optical image sensor (5) in alignment with an image plane (4) of a lens assembly (1),
the sensor having a plurality of surfaces each arranged to mate with a corresponding surface (10) on the lens assembly and one of the surfaces is defined on an elongated structure,
characterised in that
the sensor (5) is operably connected and fixed to a planar board (7) carrying the surfaces (8a) arranged to correspond with each surface on the lens assembly,
the board is retainable in a jig (13) operative to move the board in relation to the lens assembly (1) along three orthogonal axes, and
the board is provided to be soldered to the lens assembly at the corresponding surfaces and held in alignment until the solder has set.

## Patentansprüche

1. Verfahren zum Fixieren eines optischen Bildsensors (5) in Ausrichtung mit einer Bildebene (4) einer Linsenanordnung (1), wobei der Sensor mehrere Flächen (8, 8a) aufweist, die jeweils derart angeordnet sind, daß sie zu einer entsprechenden Fläche (10) an der Linsenanordnung passen, und eine der Flächen an einem länglichen Aufbau festgelegt ist, wobei das Verfahren umfaßt, daß
der Sensor (5) in Wirkverbindung mit einem Anzeigemittel (15) gebracht wird,
ein Bild zum Empfang von dem Bildsensor durch die Linsenanordnung hindurch bereitgestellt wird,
die entsprechenden Flächen zusammengebracht werden,
der Sensor relativ zur Linsenanordnung bewegt wird, wodurch die entsprechenden Flächen relativ zueinander bewegt werden, bis das von dem Sensor empfangene Bild optimiert ist,
die entsprechenden Flächen aneinander fixiert werden, und
der Sensor von dem Anzeigemittel getrennt wird,
dadurch **gekennzeichnet**, daß
der Sensor in Wirkverbindung mit einer ebene Platine (7) gebracht und an dieser fixiert wird,
die Flächen der Platine dann derart angeordnet werden, daß sie mit Flächen an der Linsenanordnung übereinstimmen,
die Platine in einer Spannvorrichtung (13) gehalten wird, die dazu dient, die Platine entlang von drei rechtwinkligen Achsen zu bewegen,
die Spannvorrichtung derart betätigt wird, daß sie die Platine relativ zur Linsenanordnung bewegt, um das von dem Sensor empfangene Bild zu optimieren, und
jedes Paar übereinstimmende Flächen unter Verwendung von Lot aneinander fixiert wird und die Platine in ihrer Stellung gehalten wird, bis das Lot ausgehärtet ist.

2. Verfahren nach Anspruch 1, wobei die andere von jedem Paar Flächen an Wänden vorgesehen ist, die Durchgangslöcher festlegen.

3. Verfahren nach Anspruch 2, wobei jeder längliche Aufbau der Linsenanordnung zugeordnet ist und sich jedes Loch durch die Platine hindurch erstreckt.

4. Verfahren nach einem der vorhergehenden Ansprüche, wobei die Spannvorrichtung ferner dazu dient, die Platine um eine Achse herum zu drehen, die sich unter einem rechten Winkel zur Ebene der Platine erstreckt, und um die Platine um eine Achse herum zu neigen, die sich in der Ebene der Platine erstreckt.

5. Verfahren nach einem der vorhergehenden Ansprüche, das umfaßt, daß die Platine bewegt wird, indem ein oder mehrere Mechanismen vom Mikrometer-Typ, die an der Spannvorrichtung vorgesehen sind, eingestellt werden.

6. Verfahren nach einem der vorhergehenden Ansprüche, wobei das Anzeigemittel dem Computer-Mittel zugeordnet ist, um eine Anzeige des Einstellungsniveaus bereitzustellen, das erforderlich ist, um den Sensor in Ausrichtung mit den projizierten Bildern zu bringen.

7. Bildsensor, umfassend
einen optischen Bildsensor (5) in Ausrichtung mit einer Bildebene (4) einer Linsenanordnung (1),
wobei der Sensor mehrere Flächen aufweist, die jeweils derart angeordnet sind, daß sie zu einer entsprechenden Fläche (10) an der Linsenanordnung passen, und eine der Flächen an einem länglichen Aufbau festgelegt ist.
dadurch **gekennzeichnet,** daß
der Sensor (5) in Wirkverbindung mit einer ebenen Platine (7) steht und an dieser fixiert ist, die die Flächen (8a) trägt, die derart angeordnet sind, daß sie mit jeder Fläche an der Linsenanordnung übereinstimmen,
die Platine in einer Spannvorrichtung (13) gehalten sein kann, die dazu dient, die Platine in bezug auf die Linsenanordnung (1) entlang von drei rechtwinkligen Achsen zu bewegen, und
die Platine derart vorgesehen ist, daß sie an die Linsenanordnung an den übereinstimmenden Flächen gelötet und in Ausrichtung gehalten werden kann, bis das Lot ausgehärtet ist.

## Revendications

1. Procédé de fixation d'un capteur optique (5) d'image dans l'alignement d'un plan image (4) d'un ensemble à lentilles (1), dans lequel le capteur a plusieurs surfaces (8, 8a) disposées chacune afin qu'elles correspondent à une surface respective (10) de l'ensemble à lentilles et l'une des surfaces est délimitée sur une structure allongée, le procédé comprenant :
le raccordement du capteur (5) à un panneau d'affichage (15) pendant le fonctionnement,
la formation d'une image destinée à être reçue par le capteur d'image par l'intermédiaire de l'ensemble à lentilles,
l'introduction des surfaces correspondantes en coopération,
le déplacement du capteur par rapport à l'ensemble à lentilles afin que les surfaces correspondantes se déplacent mutuellement jusqu'à ce que l'image reçue par le capteur soit optimisée,
la fixation des surfaces correspondantes en coopération, et
la déconnexion du capteur du dispositif d'affichage,
caractérisé par
le raccordement et la fixation du capteur à un panneau plan (7) pendant le fonctionnement, puis
la disposition des surfaces du panneau afin qu'elles correspondent aux surfaces de l'ensemble à lentilles,
le maintien du panneau dans un dispositif de montage (13) destiné à le déplacer suivant trois axes orthogonaux,
la commande du dispositif de montage afin que le panneau soit déplacé par rapport à l'ensemble à lentilles et optimise l'image reçue par le capteur, et
la fixation de chaque paire de surfaces correspondantes en coopération à l'aide de soudure et le maintien du panneau en position jusqu'à ce que la soudure soit solidifiée.

2. Procédé selon la revendiaation 1, dans lequel l'autre surface de chaque paire de surfaces est formée sur des parois délimitant des trous débouchants.

3. Procédé selon la revendication 2, dans lequel chaque structure allongée est associée à un ensemble à lentilles et chaque trou s'étend à travers le panneau.

4. Procédé selon l'une quelconque des revendications précédentes, dans lequel le dispositif de montage est en outre destiné à faire tourner le panneau autour d'un axe perpendiculaire au plan du panneau et à faire pivoter le panneau autour d'un axe qui s'étend dans le plan du panneau.

5. Procédé selon l'une quelconque des revendications précédentes, comprenant le déplacement du panneau par ajustement d'un ou plusieurs mécanismes de type micrométrique disposés sur le dispositif de montage.

6. Procédé selon l'une quelconque des revendications précédentes, dans lequel le dispositif d'affichage est associé à un dispositif à ordinateur destiné à donner une indication du niveau d'ajustement nécessaire pour que le capteur soit mis dans l'alignement des images projetées.

7. Ensemble capteur d'image, comprenant :
un capteur optique d'image (5) aligné sur un plan image (4) d'un ensemble à lentilles (1),
le capteur ayant plusieurs surfaces disposées chacune afin qu'elle corresponde à une surface respective (10) de l'ensemble à lentilles et l'une des surfaces est délimitée sur une structure allongée,
caractérisé en ce que
le capteur (5) est raccordé pendant le fonctionnement et est fixé à un panneau plan (7) portant les surfaces (8a) destinées à correspondre à chaque surface sur l'ensemble à lentilles,
le panneau peut être retenu dans un dispositif de montage (13) destiné à déplacer le panneau par rapport à l'ensemble à lentilles (1) le long de trois axes orthogonaux, et
le panneau est destiné à être fixé par soudage à l'ensemble à lentilles aux surfaces correspondantes et à être maintenu dans l'alignement jusqu'à ce que la soudure se soit solidifiée.
